## Europäisches Patentamt

## European Patent Office

## Office européen des brevets

(19)

(11) Publication number: **0 048 623**

**A2**

(12) **EUROPEAN PATENT APPLICATION**

(21) Application number: 81304347.8

(22) Date of filing: 22.09.81

(51) Int. Cl.³: **G 01 V 1/04**
**G 01 V 13/00**

(30) Priority: 23.09.80 GB 8030645

(43) Date of publication of application:
31.03.82 Bulletin 82/13

(84) Designated Contracting States:
DE FR IT NL SE

(71) Applicant: Horizon Exploration Limited
Horizon House Azalea Drive
Swanley, Kent BR8 8JR(GB)

(72) Inventor: Newman, Paul
333 Main Road
Westerham Hill Westerham Kent(GB)

(74) Representative: Abrams, Michael John et al,
HASELTINE LAKE & CO. Hazlitt House 28 Southampton
Buildings Chancery Lane
London WC2A 1AT(GB)

(54) **Underwater seismic testing.**

(57) The invention relates to a method of estimating the acoustic signatures of seismic sources, used in underwater seismic surveying, in order to obtain more accurate data on their wave form in the far field. The pressure response produced by an array of sources is sampled by a hydrophone array larger in size than that of the array of sources and positioned relatively far from the array of sources; the individual response of each of the hydrophones in the hydrophone array is measured separately, and the wave form of the source array signature is calculated from these measurements. The hydrophone responses can be analysed in order to give a numerical reconstruction of the configuration of the source array together with its reflected image at the water-air boundary, or they can be extrapolated directly to the location of interest in the far field.

Croydon Printing Company Ltd.

- 1 -

## UNDERWATER SEISMIC TESTING

This invention relates to underwater seismic testing.

Conventional methods of seismic exploration involve the initiation of seismic waves which travel through the formations of interest and suffer reflection and refraction by various layers. One or more receivers is or are located so as to pick up wave forms which have been reflected, or reflected and refracted, by the formation of interest.

When seismic exploration is carried out on land, a variety of sources can be used to initiate the seismic waves. For underwater seismic exploration, the most widely used source is a device known as an air gun. This expels a plug of compressed air directly into the water in which the air gun is immersed. This results in a wave front travelling away from the air gun, the wave front being largely undisturbed by the water through which it travels. At the sea bottom, the wave front continues travelling downwards into the submarine structure. The strata which lie beneath the sea cause a seismic wave to be reflected and refracted, and resultant wave reflections are detected by one or more hydrophones which is or are suspended in the water. One common practice is to "stream" an array of hydrophones behind the vessel which is being used for the underwater seismic exploration.

By analyzing the response from the hydrophone array, information about the submarine geology is obtained.

In order for the analysis of the hydrophone response to be of optimum value, it is important to know the nature of the pressure waveform that propagates away from the underwater seismic source. Conventionally, the pressure waveform is measured by a single hydrophone positioned directly beneath the source. We have found this conventional method to be unsatisfactory, particularly where the source itself consists of an array of individual air guns having dimensions comparable with the wavelengths of interest. We have therefore devised an improved method of estimating the wave front which interacts with the submarine strata of interest.

According to the present invention, there is provided a method of estimating the acoustic signatures of seismic sources, used in underwater seismic surveying, in order to obtain more accurate data on their wave form in the far field, in which the pressure response produced by an array of sources is sampled by a hydrophone array larger in size than that of the array of sources and positioned relatively far from the array of sources; and in which the individual response of each of the hydrophones in the hydrophone array is measured separately, and the wave form of the source array signature is calculated from these measurements.

In one embodiment of the invention, the hydrophone responses are used to reconstruct the source array configuration, together with its reflected image at the water-air boundary, so that a more accurate seismic signature can be calculated. In another embodiment of the invention, the responses of the hydrophones are extrapolated directly to provide an estimate of the seismic signature of the source obtaining at the distance of interest in the far field.

Preferably, the hydrophone detector array is a linear array positioned directly beneath the array of sources and separated therefrom by a distance of a few tens of metres, e.g. from 20 to 70 metres.

The exact location of each hydrophone in the detector array can be determined by firing a single air gun from the source array and measuring the responses of each of the hydrophones.

The seismic signature of the source array can be calculated by assuming that the wave is propagated through a constant velocity medium. Conventional analytical techniques enable the seismic signature to be calculated not only vertically beneath the source array but also at any other sub-surface location that may be defined by appropriate coordinate specifications.

~~By employing seismic signatures estimated in accordance with the present invention, the results obtained using conventional seismic explorations.~~

By employing seismic signatures estimated in accordance with the present invention, the results obtained using conventional seismic exploration methods (e.g. with an array of hydrophones streamed behind the seismic vessel) show better resolution than the results derived when a conventionally determined seismic source signature is used.

Claims:

1. A method of estimating the acoustic signatures of seismic sources, used in underwater seismic surveying, in order to obtain more accurate data on their wave form in the far field, in which the pressure response produced by an array of sources is sampled by a hydrophone array larger in size than that of the array of sources and positioned relatively far from the array of sources; and in which the individual response of each of the hydrophones in the hydrophone array is measured separately, and the wave form of the source array signature is calculated from these measurements.

2. A method according to claim 1, wherein the hydrophone responses are analysed in order to give a numerical reconstruction of the configuration of the source array together with its reflected image at the water-air boundary.

3. A method according to claim 1, wherein the hydrophone responses are extrapolated directly to the location of interest in the far field.

4. A method according to claims 1, 2 or 3, wherein the hydrophone array is positioned directly beneath the array of sources and is separated therefrom by a distance of 20 - 70 metres.